# EUROPEAN PATENT APPLICATION

(11) **EP 2 100 581 A1**
(43) Date of publication of application: **16.09.2009**
(21) Application number: 08425148.7
(22) Date of filing: 12.03.2008
(51) Int. Cl.: A61J 3/07, B65B 1/36, B65B 1/38, G01F 11/02

(54) **Machine for filling containers with at least one powdered product**

(71) Applicant: MG2 S.r.l, 40065 PIANORO (IT)
(72) Inventor: Ansaloni, Angelo, 40056 Crespellano (IT)
(74) Representative: Jorio, Paolo

(57) **Abstract**

In a continuous machine for filling containers (3) with at least one powdered product, each container (3) is fed along a path (P) phased with a corresponding metering device (19), which transfers the product from a tank (17) to the container (3), and has a cylinder (29) and a piston (38) axially movable under the bias of corresponding tappets (24,34,39) engaged in corresponding cams (25,35,40); the cam (35,40) of the piston (38) having a horizontal segment (40), which keeps the piston (38) on the upper surface of the product during the insertion of the cylinder (29) into the product itself, and whose vertical position is selectively controlled according to a height (h) of the product in the tank (17) setting volume of metering chamber.

## Description

The present invention relates to a machine for filling containers with at least one powdered product.

Specifically, the present invention relates to a machine for filling capsules with at least one powdered pharmaceutical product, to which the following description will explicitly refer without therefore loosing in generality.

In the pharmaceutical industry, a machine for filling capsules with at least one powdered pharmaceutical product is known comprising a conveying device, which is continuously movable along a given path, and is provided with a plurality of pockets, each adapted to receive a corresponding bottom shell of a corresponding capsule; a rotating container for the product; and a metering wheel mounted to continuously rotate about a longitudinal axis thereof.

The metering wheel is provided with a plurality of metering devices, each of which is fed by the metering wheel firstly through a withdrawal station of a given amount of product from the container and then along a portion of the aforesaid path phased with a corresponding pocket for transferring the product into the corresponding bottom shell.

Each metering device comprises a cylinder and a piston axially movable under the bias of an actuating device comprising, in turn, a first and a second cam extending about the longitudinal axis of the metering wheel, a first tappet mounted on the piston and engaged in the first cam, and a second tappet mounted on the cylinder and engaged in the second cam.

The first cam comprises a first segment parallel to the second cam so as to displace the cylinder and piston with reciprocally identical laws of motion, and at least one second segment, which is obtained in a block removably connected to the first segment at the withdrawal station, and is horizontally and differently oriented from the second cam to keep the piston on the upper surface of the product contained in the tank during the insertion of the cylinder in the product itself.

The stop of the piston at the upper surface of the product allows to avoid the presence of air inside a metering chamber defined between the piston and the cylinder during the insertion of the cylinder in the product itself.

Since the height of the product contained in the tank is selectively adjusted according to the chemical-physical features of the product and/or to the amount of the product which is to be withdrawn by the corresponding metering devices, the adjustment of the height of the product in the tank implies replacing the aforesaid block each time with a new block shaped to stop the piston at the new height of the product in the tank.

The known machines of the above-described type thus display several drawbacks mainly deriving from the fact that the replacement of the blocks implies the availability and the storage of a relatively high number of blocks, severe operative difficulties for the operating personnel, and relatively long equipping times of the machines, and further allows to only discretely vary the height of the product contained in the tank.

It is the object of the present invention to provide a machine for filling containers with at least one powdered product, which is free from the above-described drawbacks.

According to the present invention, there is provided a machine for filling containers with at least one powdered product as claimed in the appended claims.

The present invention will now be described with reference to the accompanying drawings, which disclose a non-limitative embodiment thereof, in which:
figure 1 is a schematic side view, with parts in section and parts removed for clarity, of a preferred embodiment of the machine of the present invention;
figure 2 is a schematic perspective view, with parts removed for clarity, of the machine in figure 1;
figure 3 is a schematic longitudinal section of a first detail of the machine in figures 1 and 2;
figure 4 is a schematic plane development of a second detail of the machine in figures 1 and 2;
figure 5 is similar to figure 4 and shows the detail in figure 4 in three different operative positions; and
figure 6 schematically shows the operating principle of the machine in figures 1 and 2.

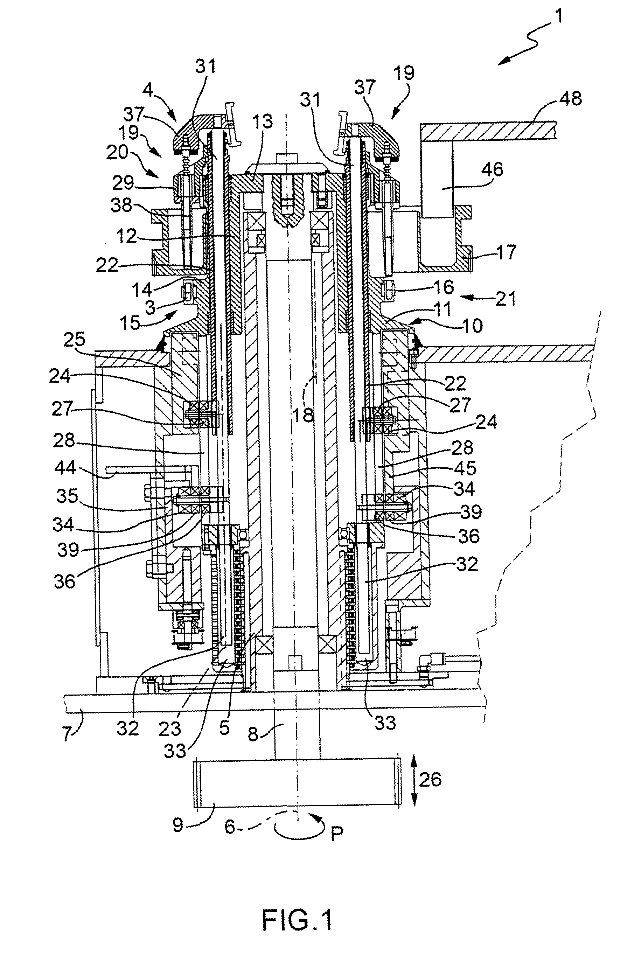

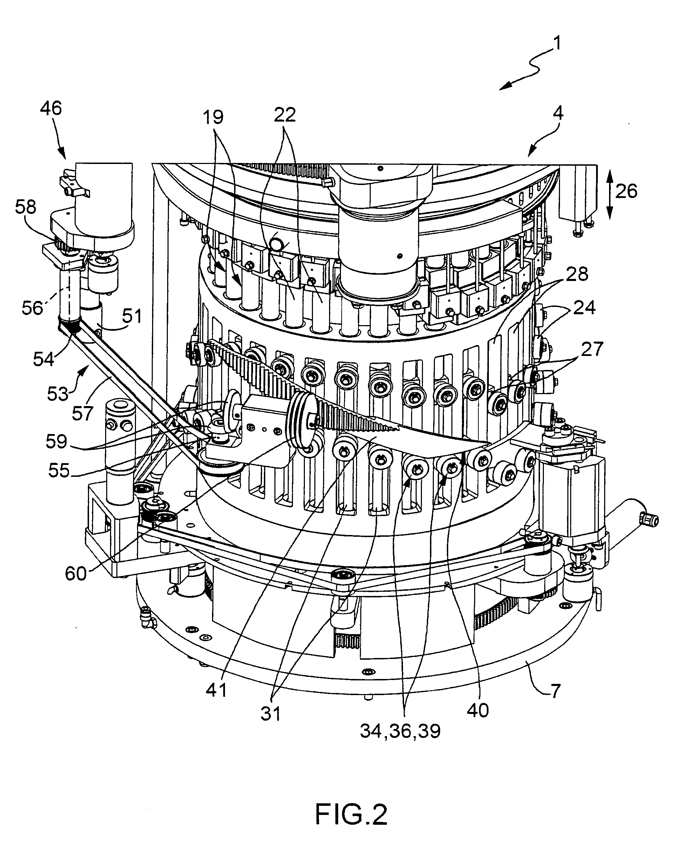

With reference to figures 1, 2 and 3, numeral 1 indicates as a whole a machine for filling capsules 2 of a known type with a powdered pharmaceutical product. Each capsule 2 comprises a substantially cup-shaped bottom shell 3 and a top shell (not shown) fitted onto the bottom shell 3 itself.

The machine 1 includes a metering wheel 4, in turn comprising a tubular vertical upright 5, which has a longitudinal axis 6, extends upwards from a fixed frame 7 of the machine 1, and is engaged by a shaft 8, which extends inside the upright 5 coaxially with axis 6, and is rotationally coupled to the upright 5 to continuously rotate, with respect to the upright 5 itself and under the bias of an actuating device 9 of a known type, about axis 6.

The shaft 8 supports a feeding drum 10 including a substantially cylindrical casing 11, which is coaxial with the axis 6, is arranged with the concavity thereof facing downwards, is laterally bounded by a wall 12 extending about the upright 5, and is closed at the top by a bottom wall 13, which is substantially orthogonal to the axis 6, and is fixed to one end of the shaft 8 projecting outwards of the upright 5.

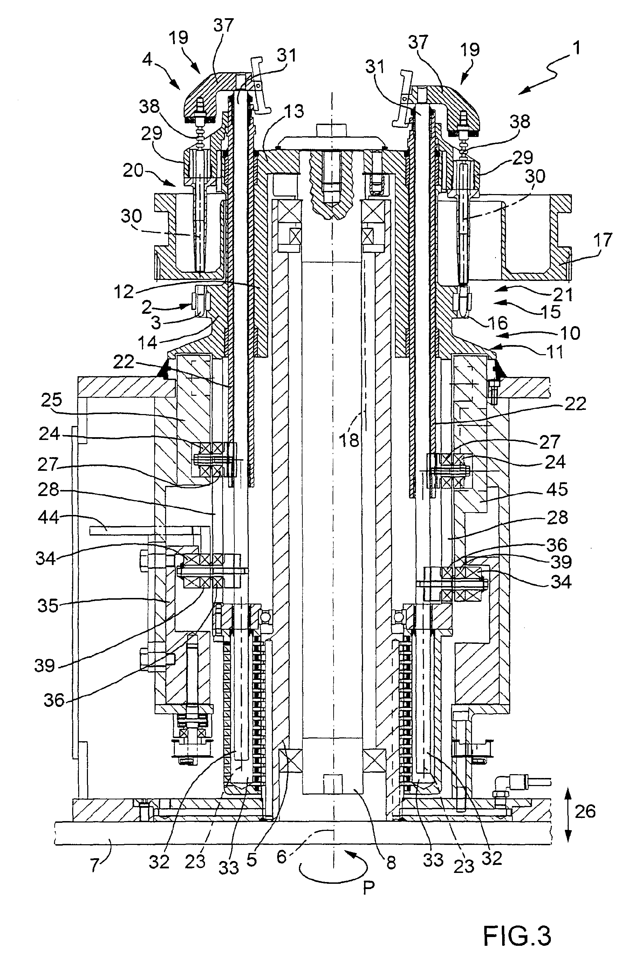

On the external surface of the wall 12 a sprocket 14 defining part of a chain conveyor 15 of a known type is obtained, which is looped about a plurality of sprockets (of which only sprocket 14 is shown in figures 1 and 3) actuated by the device 9, and is provided with a plurality of cup-shaped pockets 16 which have an upward-facing concavity, are uniformly distributed along the conveyor 15, are each adapted to accommodate a corresponding bottom shell 3 arranged with the concavity thereof facing upwards, and are continuously fed by the conveyor 15 itself along a given path P.

The wheel 4 further comprises an annular container 20, which contains the powdered pharmaceutical product therein, and which extends over the sprocket 14 and is rotationally coupled to the frame 7 to continuously rotate, with respect to the frame 7 itself and under the bias of an actuating device of a known type (not shown), about a corresponding longitudinal axis 18 parallel to the axis 6, at an angular speed which substantially differs from the angular speed of the drum 10 and, therefore, of the sprocket 16.

The drum 10 is provided with a plurality of metering devices 19, which are uniformly distributed about the axis 6, and are continuously fed by the drum 10 about the axis 6 itself. Each device 19 is fed by the drum 10 firstly through a withdrawal station 20, wherein the device 19 withdraws a given amount of product from the container 17, and thus phased with a corresponding pocket 16 along a segment of the path P extending through a filling station 21, wherein the device 19 transfers the product into the corresponding bottom shell 3.

Each device 19 comprises a substantially cylindrical sleeve 22, which has a longitudinal axis 23 substantially parallel to the axis 6, extends through the casing 11, is coupled in an axially sliding manner to the casing 11, and is provided with a tappet roller 24, which engages a cam 25 extending about the axis 6 and allows to selectively control the position of the sleeve 22 in a direction 26 parallel to the axes 6 and 18.

The sleeve 22 is further coupled in an angularly fixed manner to the drum 10 by means of a tappet roller 27, which is mounted on the sleeve 22, and is engaged in a corresponding slot 28 obtained through the casing 11 parallelly to the direction 26 to prevent the sleeve 22 from rotating about the axis 23. Furthermore, the sleeve 22 supports, at an upper end thereof, a cylinder 29 by the side of the sleeve 22 and having a longitudinal axis parallel to the axis 23.

The device 19 further comprises a shaft 31, which is fitted inside the sleeve 22 coaxially to the axis 23, is slidingly coupled to the sleeve 22 to perform, with respect to the sleeve 22 itself, rectilinear displacements in the direction 26, and has a lower end 32, which protrudes at the bottom from the sleeve 22 in the direction 26, and is fluid-tightly coupled with a pneumatic chamber 33 connected to a compressed air feeding device (known and not shown).

The shaft 31 is displaced in the direction 26 by means of a tappet roller 34, which is mounted on the shaft 31, and is kept in contact with a cam 35 extending about the axis 6 parallelly to the cam 25 under the upward bias exerted on the shaft 31 by the compressed air fed to the chamber 33.

According to a variant (not shown), the roller 34 is kept in contact with the cam 35 by means of at least one spring arranged between the sleeve 22 and the shaft 31.

Each shaft 31 is further coupled in an angularly fixed manner to the drum 10 by means of a tappet roller 36, which is mounted on the shaft 31, and is engaged in the corresponding slot 28 to prevent the shaft 31 itself from rotating about the axis 23.

At the upper end of the shaft 31 , by means of the interposition of a supporting bracket 37, a substantially cylindrical piston 38 is fixed, which protrudes downwards from the bracket 37, engages in a sliding manner the corresponding cylinder 29, and has a diameter rounding down the diameter of the cylinder 29 itself.

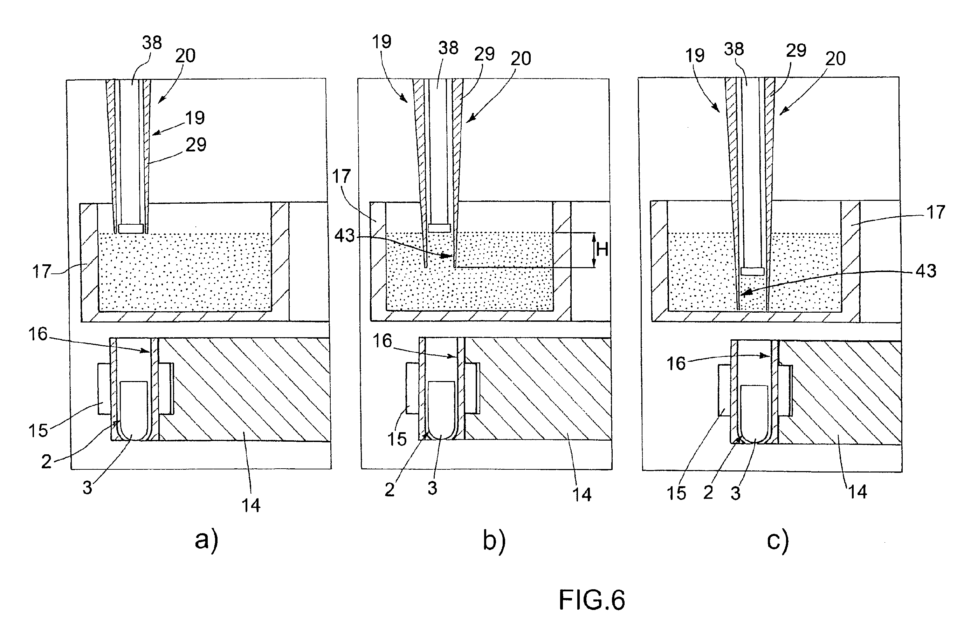

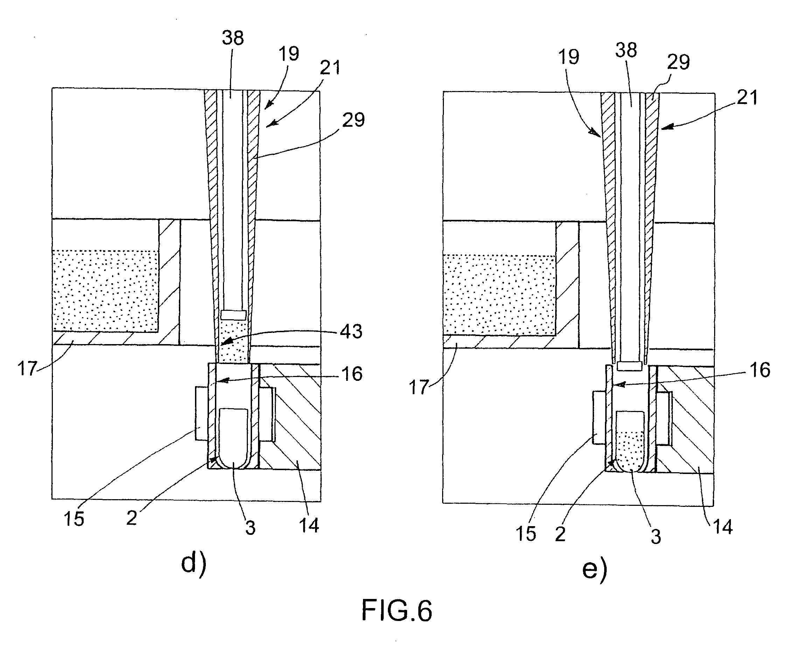

The operation of the machine 1 will now be described with reference to figures 3 and 6, assuming the filling of only one bottom shell 3, and starting from a moment in which the corresponding metering device 19 has been fed to the withdrawal station 20 (figures 3 and 6a) and faces the container 17.

By combining the displacement of the device 19 considered about the axis 6 with the action of the cams 25, 35, the cylinder 29 and the piston 38 are lowered in the direction 26 at the station 20 with laws of motion which are substantially identical to each other, so as to be arranged in contact with the upper surface of the product contained in the container 20 (figure 6a).

At this point, the piston 38 is kept in contact with the upper surface of the product by engaging a tappet roller 39 mounted on the shaft 31 in a substantially horizontal cam 40 obtained along a lower edge of a block 41, which has a helical shape, extends about the axis 6, and slidingly engages a guiding channel 42 helically wound about the axis 6 itself. In other words, upon the rotation of the metering wheel 4 about the axis 6, the roller 39 engages the cam 40 causing the disengagement of the roller 34 from the cam 35 and interrupting the descent of the piston 38 (figure 6a and 6b).

At the same time, the cylinder 29 is lowered into the product by means of the cam 25 so as to delimit a metering chamber 43, which has a height H corresponding to the correct amount of product to be withdrawn, and is formed keeping the piston 38 substantially in contact with the upper surface of the product to avoid the presence of air within the chamber 43 itself (figure 6b).

After delimiting the chamber 43, the roller 39 disengages the cam 40 allowing the roller 34 to engage the cam 35 again and the cams 25, 35 to lower the cylinder 29 again and, respectively, the piston 38 with laws of motion which are substantially identical to each other, and to displace the cylinder 29 substantially in contact with the bottom wall of the container 17 (figure 6c).

The piston 38 is then further lowered with respect to the cylinder 29 in the direction 26 to compact the product contained in the chamber 43 (figure 6c). The lowering of the piston 38 is obtained by engaging the roller 39 in a cam 44 and consequently releasing the roller 34 from the cam 35.

At this point, by combining the displacement of the device 19 about the axis 6 with the action of the cams 25, 35 and with the eccentric assembly of the container 17 with respect to the drum 10, the device 19 is raised in the direction 26, is extracted from the container 17, and is fed in phase with a corresponding pocket 16 through the filling station 21, at which the cylinder 29 and the piston 38 face the pocket 16 and, thus, the corresponding bottom shell 3 (figure 6d).

Finally, the piston 38 is lowered again with respect to the cylinder 29 in the direction 26 to transfer the product from the chamber 43 into the bottom shell 3 (figure 6e). The lowering of the piston 38 is obtained by engaging the roller 39 in a cam 45 mounted at the station 21 and consequently releasing the roller 34 from the cam 35.

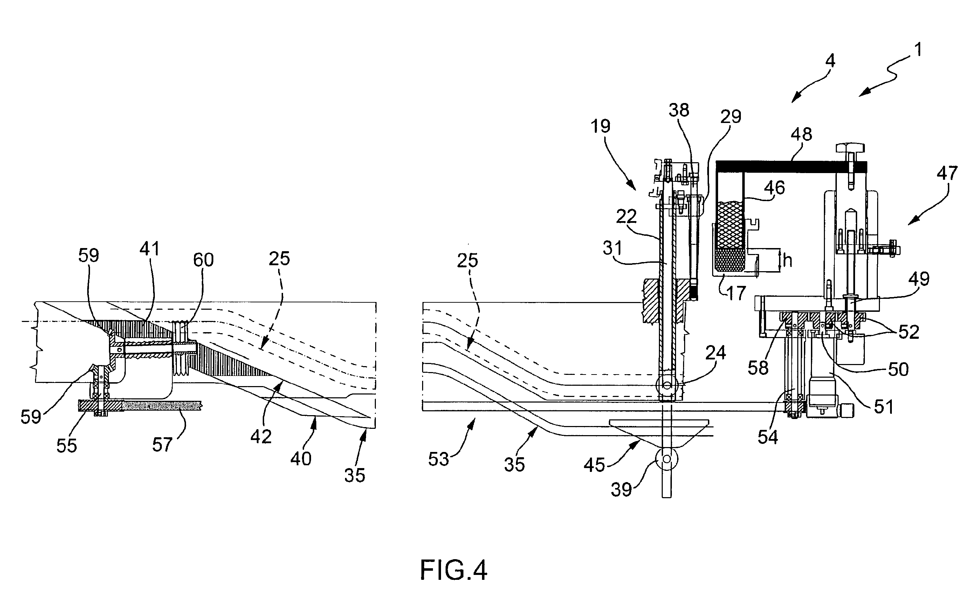

With reference to figures 1 and 4, the powdered pharmaceutical product is fed into the container 17 by means of a feeding hopper 46, which is inserted in a container 17, has the shape of a circular sector extending about the axis 18, is open at the bottom, is coupled in an angularly fixed manner to the frame 7, and is further slidingly coupled to the container 17 for performing, with respect to the container 17 itself, rectilinear displacements in the direction 26.

Furthermore, the hopper 46 defines a levelling element of the product inside the container 17, and is thus arranged at a distance from the bottom wall of the container 17 equal to a height h of the product in the container 17 itself.

The position of the hopper 46 in the direction 26 and, thus, the height h of the product in the container 17, are selectively controlled according to the chemical-physical features of the product and/or to the amount of product which is to be withdrawn by the metering devices 19 by means of an actuating device 47 comprising a substantially flat and horizontal supporting bracket 48, which is slidingly coupled to the frame 7, and is further coupled by means of a screw/nut-screw coupling to a screw 49, which extends in the direction 26, and is coupled to an outlet shaft 50 of an electric motor 51 by means of the interposition of a pair of gears 52 so as to rotate under the propulsion of the motor 51 and to impart rectilinear displacements in the direction 26 to the bracket 48.

The adjustment of the position of the hopper 46 in the direction 26 and, thus, of the height h of the product in the container 17 necessarily implies a corresponding adjustment of the position of the piston 38 in the direction 26 so as to keep the piston 38 always substantially in contact with the upper surface of the product, regardless of the height h, when forming the metering chamber 43 (figures 6a and 6b).

With this regard, the block 41 is displaced along the guiding channel 42 by means of a drive assembly 53 interposed between the motor 51 and the block 41 and comprising two driving shafts 54, 55, which are mounted with respect to the frame 7 to rotate about corresponding longitudinal axes 56 parallel to the direction 26, and are reciprocally connected by means of a drive belt 57 extending on a horizontal plane substantially orthogonal to the direction 26 itself.

The shaft 54 is coupled to the outlet shaft 50 of the motor 51 by means of a pair of gears comprising the gear 52 mounted on the shaft 50 and a gear 58 mounted on the shaft 54, while the shaft 55 is coupled by means of a pair of bevel gears 59 to a screw 60, which extends transversally with respect to the direction 26, and is coupled to the block 41 by means of a worm-helical wheel coupling.

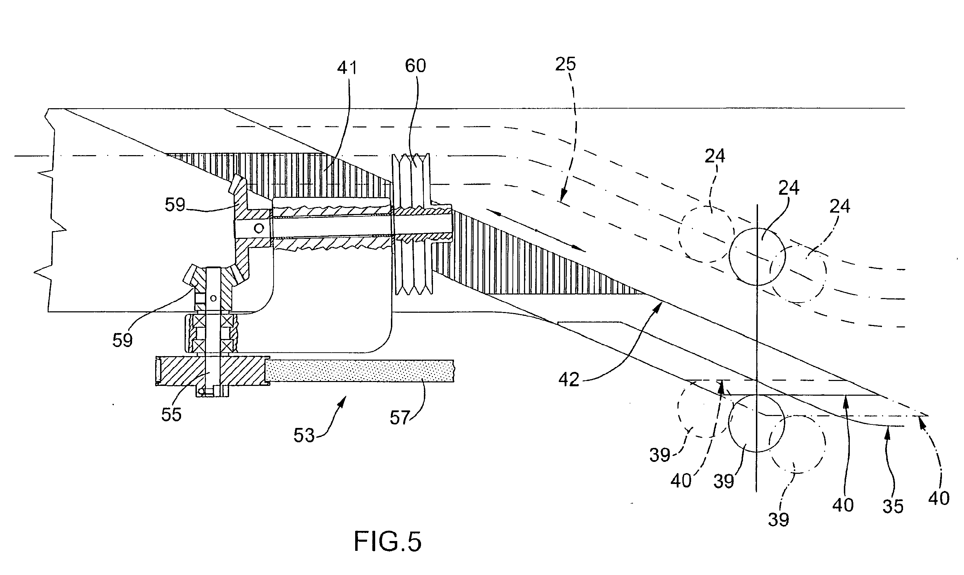

From the above, it is apparent that the actuation of the motor 51 implies the adjustment of the position of the hopper 46 in the direction 26 and, thus, of the height h of the product in the container 17 and, at the same time, the adjustment of the position of the block 41 along the guiding channel 42 (figure 5), of the position of the cam 40 in the direction 26, and, therefore, of the position of the piston 38 when forming the metering chamber 43.

Obviously, according to a variant (not shown), the drive assembly 53 is eliminated and replaced by an electric actuating motor of the screw 60 interconnected to and phased with the motor 51.

Furthermore, it is worth noting that the cam 35 is slidingly coupled to the cam 25 to perform rectilinear displacements in the direction 26 with respect to the cam 25 and under the bias of an actuating device (known and not shown), and to selectively control the height H of the metering chambers 43.

The machine 1 thus allows to selectively and continuously control the position of the piston 38 in the direction 26 when forming the metering chamber 43 according to the height h of the product in the container 17 by means of a single block 41.

## Claims

1. A machine for filling containers (3), in particular capsules, with at least one powdered product, in particular a pharmaceutical product, the machine comprising conveying means (15) for continuously feeding each container (3) along a given path (P); a tank (17) for the product; at least one metering wheel (4) mounted to continuously rotate about a longitudinal axis thereof (6); a plurality of metering devices (19), each of which includes a corresponding cylinder (29) and a corresponding piston (38), and is fed by the metering wheel (4) firstly through a first withdrawal station (20) of a given amount of product from the tank (17) and then along a portion of the path (P) phased with a corresponding container (3) for transferring the product into the container (3) itself; and an actuating device for axially displacing each cylinder (29) and the corresponding piston (38) in a direction (26) parallel to said axis (6), the actuating device comprising a first cam (35) extending about said axis (6), a first tappet (34) carried by the piston (38) and engaged in the first cam (35), a second cam (25) extending about said axis (6), and a second tappet (24) carried by the cylinder (29) and engaged in the second cam (25), the first cam (35) comprising a first segment substantially parallel to the second cam (25) and a substantially horizontal second segment (40), which is connected to the first segment, and is arranged at the withdrawal station (20) for keeping the piston (38) on the upper surface of the product contained in the tank (17) during the insertion of the cylinder (29) into the product itself; and being **characterised in that** it comprises a first adjustment device (51, 53) for selectively controlling the position of the second segment (40) in said direction (26) according to a height (h) of the product in said tank (17).

2. A machine according to claim 1, wherein the second segment (40) is movable, with respect to the first segment, with a rotational-translational movement along and about said axis (6).

3. A machine according to claim 1 or 2, wherein the second segment (40) has a substantially helical shape.

4. A machine according to any one of the preceding claims and further comprising a guiding channel (42), which is helically wound along and about said axis (6), and is slidingly engaged by said second segment (40).

5. A machine according to any one of the preceding claims and further comprising a second adjustment device (47) for selectively controlling the height (h) of the product in the tank (17).

6. A machine according to claim 5, wherein said first and second adjustment devices (51, 53, 47) comprise corresponding actuating motors reciprocally interconnected and phased.

7. A machine according to claim 5, wherein the second adjustment device (47) comprises a levelling member (46) movable in said direction (26) with respect to a bottom wall of the tank (17); said first and second adjustment devices (51, 53, 47) comprising a single actuating motor (51), a first drive assembly (53) for connecting together the actuating motor (51) and the second segment (40), and a second drive assembly (48, 49) for connecting together the drive motor (51) and the levelling member (46).

8. A machine according to claim 7, wherein the first drive assembly (53) comprises a drive member (60) connected to said second segment (40) by means of a worm-helical wheel coupling.

9. A machine according to any one of the preceding claims, wherein the second segment (40) and the second cam (25) mutually cooperate to axially and reciprocally displace the cylinder (29) and the piston (38) in said direction (26) so as to define a metering chamber (43); the first and second cams (35, 25) being reciprocally movable in said direction (26) for selectively controlling a height (H) of the metering chamber (43).
